# EUROPEAN PATENT APPLICATION

(11) **EP 4 329 164 A1**
(43) Date of publication of application: **28.02.2024**
(21) Application number: 22837721.4
(22) Date of filing: 06.07.2022
(51) Int. Cl.: H02K 9/19, H02K 15/14

(54) **COOLING MEMBER FOR ROTATING ELECTRIC MACHINE, ROTATING ELECTRIC MACHINE, AND METHOD FOR MANUFACTURING COOLING MEMBER FOR ROTATING ELECTRIC MACHINE**

(30) Priority: 09.07.2021 JP 2021114607
(71) Applicant: AISIN CORPORATION, Kariya-shi, Aichi 448-8650 (JP); Art Metal Mfg. Co., Ltd., Ueda-shi, Nagano 386-0027 (JP)
(72) Inventor: TAKI, Yasuhiro, Kariya-shi, Aichi 448-8650 (JP); IKEDA, Masaki, Ueda-shi, Nagano 386-0027 (JP); SUZUKI, Gaku, Ueda-shi, Nagano 386-0027 (JP)
(74) Representative: Kramer Barske Schmidtchen Patentanwälte PartG mbB
(86) International application number: PCT/JP2022/026888
(87) International publication number: WO 2023/282307

(57) **Abstract**

A cooling member for a rotating electrical machine includes: a first portion forming a cooling medium inlet hole; a second portion forming a cooling medium outlet hole; and a third portion forming a cooling medium passage that connects the cooling medium inlet hole and the cooling medium outlet hole without communicating with outside. The third portion includes, in the cooling medium passage, a plurality of first pillar portions each standing in a first direction perpendicular to a flow of a cooling medium, and a plurality of protruding portions each protruding in the first direction. The cooling medium is in contact with surfaces of the plurality of first pillar portions and surfaces of the protruding portions that are exposed to the cooling medium passage.

## Description

### TECHNICAL FIELD

The present disclosure relates to cooling members for rotating electrical machines, rotating electrical machines, and methods for manufacturing a cooling member for a rotating electrical machine.

### BACKGROUND ART

There is known a channel structure in which radial pillar portions are provided between a radially inner cylindrical wall portion and a radially outer cylindrical wall portion.

### Related Art Documents

### Patent Documents

Patent Document 1: German Unexamined Patent Application Publication No. 102009047215 (DE 102009047215 A)

### SUMMARY OF THE INVENTION

### Problem to be Solved by the Invention

A channel structure having a plurality of pillar portions, such as the above prior art, is advantageous in that the outer circumferential surfaces of the pillar portions are in contact with a cooling medium passage and therefore the surface area that allows heat exchange can be efficiently increased. In such a channel structure having the plurality of pillar portions, it is useful from the standpoint of achieving uniform cooling performance at each position in the cooling medium passage to form the pillar portions in an arrangement that does not cause an uneven flow of a cooling medium. For example, each pillar portion stands perpendicularly to the flow of the cooling medium and therefore impedes the flow. However, if the number of pillar portions is locally small in any part of the cooling medium passage, a large amount of cooling medium flows in this part, which tends to cause an uneven flow of the cooling medium.

Due to various manufacturing constraints, however, it is difficult to dispose the pillar portions in the cooling medium passage in an arrangement that reduces unevenness of the flow of the cooling medium while meeting manufacturing requirements. For example, when a collapsible core is used to form a hollow portion for the cooling medium passage, the collapsible core is molded so as to have radial through holes for forming the pillar portions. In the case of a type of collapsible core that is molded by applying a pressure, however, it is difficult to set radial through holes in one piece of the collapsible core as desired.

Therefore, in one aspect, it is an object of the present disclosure to reduce, in a channel structure having a plurality of pillar portions, unevenness in the flow of a cooling medium while meeting manufacturing requirements.

### Means for Solving the Problem

In one aspect, a cooling member for a rotating electrical machine is provided. The cooling member includes: a first portion forming a cooling medium inlet hole; a second portion forming a cooling medium outlet hole; and a third portion forming a cooling medium passage that connects the cooling medium inlet hole and the cooling medium outlet hole without communicating with outside. The third portion includes, in the cooling medium passage, a plurality of first pillar portions each standing in a first direction perpendicular to a flow of a cooling medium, and a plurality of protruding portions each protruding in the first direction. The cooling medium is in contact with surfaces of the plurality of first pillar portions and surfaces of the protruding portions that are exposed to the cooling medium passage.

### Effects of the Invention

In one aspect, according to the present embodiment, in a channel structure having a plurality of pillar portions, unevenness in the flow of a cooling medium can be reduced while meeting manufacturing requirements.

### BRIEF DESCRIPTION OF THE DRAWINGS

[FIG. 1] FIG. 1 is a front view schematically showing the appearance of a rotating electrical machine according to an embodiment.
[FIG. 2] FIG. 2 is a side view (plan view as viewed in the axial direction) schematically showing a part of the rotating electrical machine.
[FIG. 3] FIG. 3 is a sectional view schematically showing a part of the rotating electrical machine taken along a plane passing through the rotation axis of the rotating electrical machine.
[FIG. 3A] FIG. 3A is an illustration of a coolant passage and is an enlarged view of a portion Q1 in FIG. 3.
[FIG. 3B] FIG. 3B is an illustration of a case oil passage and is an enlarged view of a portion Q2 in FIG. 3.
[FIG. 4] FIG. 4 is a perspective view showing a core for the coolant passage alone.
[FIG. 5] FIG. 5 is a perspective view showing one divided part (annular core) forming the core.
[FIG. 6] FIG. 6 is an enlarged view of a part of the annular core.
[FIG. 7A] FIG. 7A is a sectional view taken along line A-A in FIG. 4.
[FIG. 7B] FIG. 7B is a sectional view taken along line B-B in FIG. 4.
[FIG. 7C] FIG. 7C is a sectional view taken along line C-C in FIG. 4.
[FIG. 8] FIG. 8 is a schematic diagram illustrating an example of a method for molding radial recesses and axial first recesses.
[FIG. 9] FIG. 9 is an illustration of the flow of a coolant in the coolant passage of the embodiment, and is a top view showing a part of an outer shell of the cooling channel.
[FIG. 10] FIG. 10 is a sectional view taken along line D-D in FIG. 9.
[FIG. 11] FIG. 11 is a sectional view taken along line E-E in FIG. 9.
[FIG. 12] FIG. 12 is an illustration of the flow of the coolant in a coolant passage according to a comparative example, and is a top view showing a part of an outer shell of the coolant passage.
[FIG. 13] FIG. 13 is a schematic flowchart showing the flow of a method for manufacturing a stator.
[FIG. 14] FIG. 14 is a diagram illustrating the manufacturing method shown in FIG. 13, and is a sectional view schematically showing the state during a casting step.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description. For simplicity, reference signs may be given only to part of a plurality of portions having the same attribute throughout the drawings.

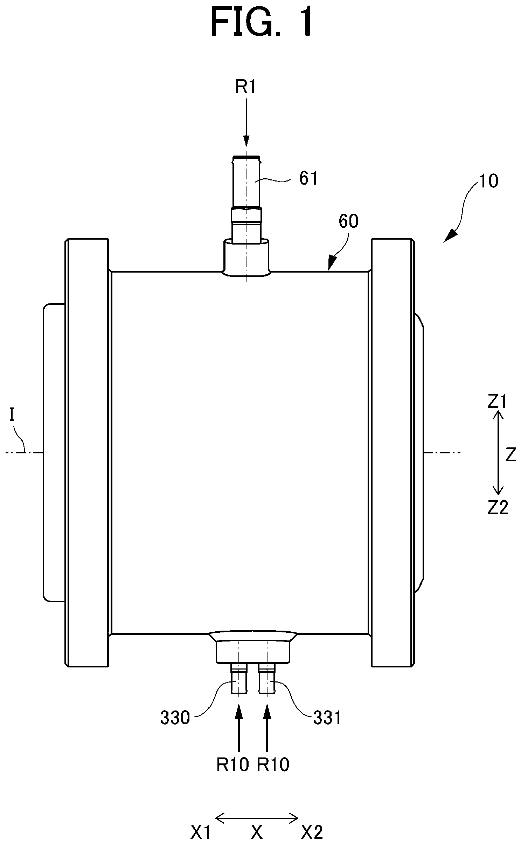

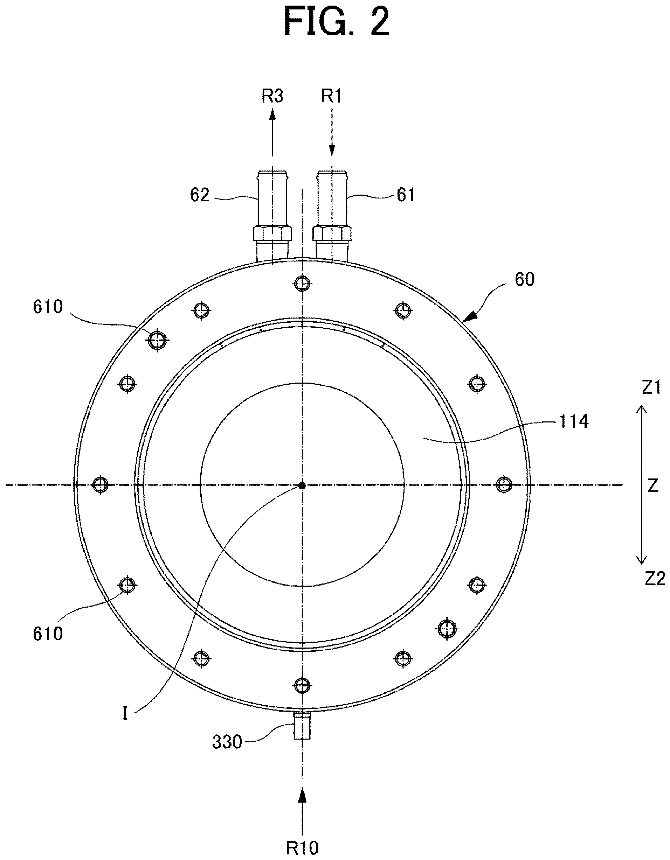

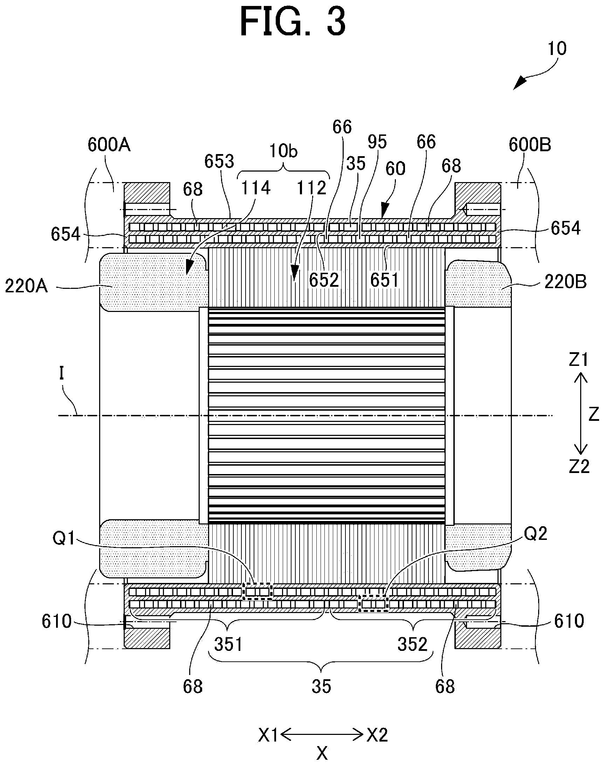

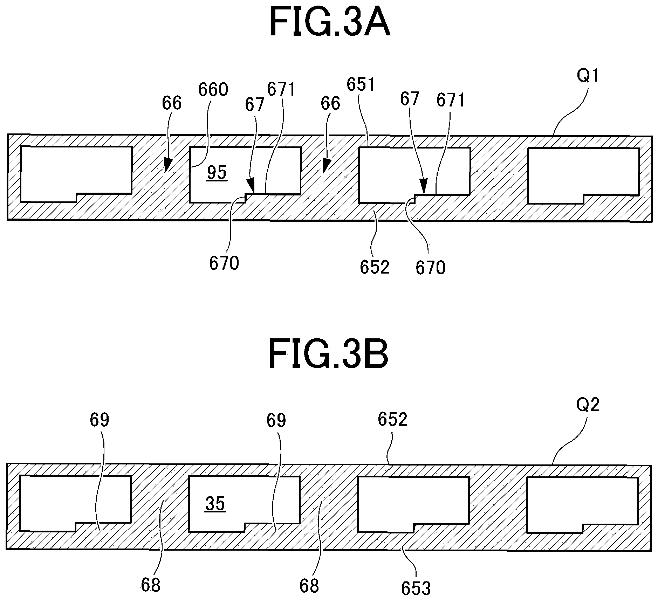

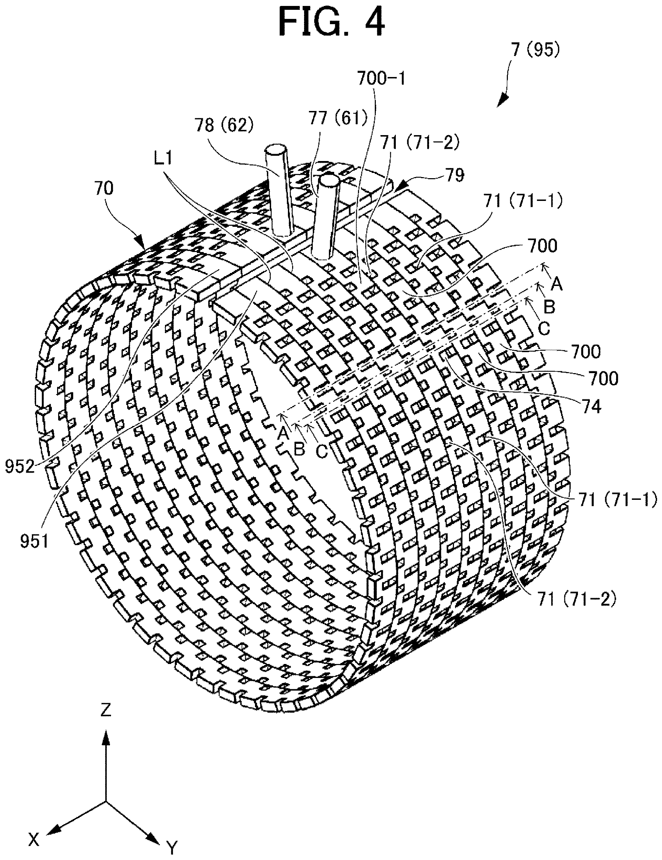

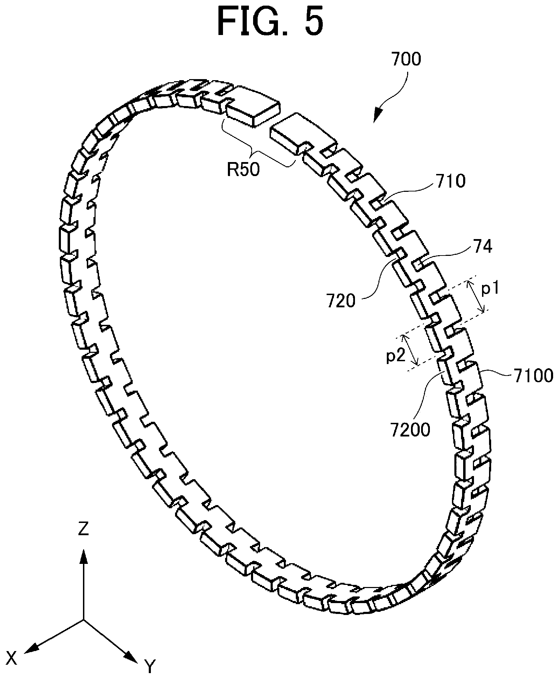

FIG. 1 is a front view schematically showing the appearance of a rotating electrical machine 10 according to the present embodiment. FIG. 2 is a side view (plan view as viewed in the axial direction) schematically showing a part of the rotating electrical machine 10. FIG. 3 is a sectional view schematically showing a part of the rotating electrical machine 10 taken along a plane passing through a rotation axis I of the rotating electrical machine 10. The structures of a coolant passage 95 and a case oil passage 35 are schematically shown in FIG. 3, and will be described later in detail with reference to FIGS. 3A, 3B, FIG. 5, and the subsequent figures. FIG. 3A is an enlarged view of a portion Q1 in FIG. 3. FIG. 3B is an enlarged view of a portion Q2 in FIG. 3. FIG. 4 is a perspective view showing a core 7 for the coolant passage 95 alone. In FIGS. 1 to 3, a rotor of the rotating electrical machine 10 is not shown, and a stator coil 114 etc. are shown schematically.

Hereinafter, the radial direction (example of the first direction), the circumferential direction (example of the second direction), and the axial direction (example of the third direction) are the directions with respect to the rotation axis I (= central axis of a stator core 112) of the rotating electrical machine 10 unless otherwise specified. In the following description, the vertical direction represents the vertical direction with the rotating electrical machine 10 mounted such that the rotation axis I is substantially parallel to the horizontal direction. The Z direction corresponding to the vertical direction and the X direction corresponding to the axial direction are shown in FIG. 1 etc. In this case, the Z direction is perpendicular to the rotation axis I, with the Z1 side being the upper side and the Z2 side being the lower side. However, the mounted rotating electrical machine 10 may be in any orientation. A coordinate system (right-handed coordinate system) in which the Y-axis perpendicular to the X- and Z-axes corresponding to the X direction and the Z direction shown in FIG. 1 etc., respectively, is added is shown in FIG. 4.

The rotating electrical machine 10 includes the rotor (not shown) and a stator 10b. The stator 10b includes the stator core 112 and the stator coil 114. The stator coil 114 includes coil ends 220A, 220B at both ends in the axial direction.

The rotating electrical machine 10 includes a support case 60.

As shown in FIGS. 1, 2, etc., the support case 60 is in an annular form, and can serve as a case for the rotating electrical machine 10. For example, the support case 60 is open on both sides in the axial direction (does not substantially overlap the stator core 112 as viewed in the axial direction). The support case 60 is coupled to different case members 600A, 600B (schematically shown by the long dashed short dashed lines in FIG. 3) on both sides in the axial direction. Although not shown in FIG. 3, the case member 600A or 600B on one end side in the axial direction may rotatably support the rotor (not shown). FIGS. 2 and 3 illustrate holes 610 for bolting to the different case members 600A, 600B. The support case 60 may thus be coupled to the different case members 600A, 600B such that axial end faces of the support case 60 abut on axial end faces of the different case members 600A, 600B in the axial direction. The holes 610 for bolting may be in the form of through holes extending in the axial direction, or may be in the form of non-through holes.

The support case 60 is made of a material mainly composed of aluminum. For example, the support case 60 is preferably made of an aluminum alloy with a high corrosion resistance because the coolant passage 95 through which a coolant passes is formed therein as will be discussed later. Any aluminum alloy such as an Al-Si alloy, an Al-Mg alloy, or an Al-Mg-Si alloy may be used.

The support case 60 is a structure having a hollow portion (cavity) that forms the case oil passage 35 and the coolant passage 95 (see FIG. 3) as described later. The support case 60 having such a hollow portion is a single-piece member, and can be formed by casting using a core (insert) (see the core 7 in FIG. 4).

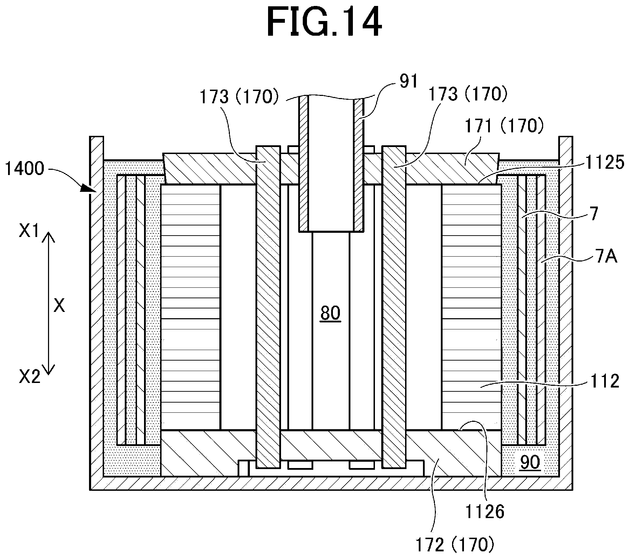

Although FIG. 4 schematically shows the core 7 for the coolant passage 95, a core for the case oil passage 35 (see a core 7A in FIG. 14) is also prepared. The core 7 shown in FIG. 4 includes a solid cylindrical portion 70 for forming the coolant passage 95. A plurality of through holes 71 (radial through holes) for forming pillar portions 66 and a plurality of radial recesses 74 (radial non-through holes) for forming protruding portions 67 are formed in the cylindrical portion 70. The through holes 71 include through holes 71-1 for those pillar portions 66 that are adj acent to the protruding portions 67 in the axial direction (hereinafter referred to as "first pillar portions 66-1" when distinguished) out of the pillar portions 66, and through holes 71-2 for those pillar portions 66 that are not adjacent to the protruding portions 67 in the axial direction (hereinafter referred to as "second pillar portions 66-2" when distinguished) out of the pillar portions 66. The radial recesses 74 are formed adjacent to the through holes 71-1 in the axial direction.

The core 7 includes an axial groove (circumferentially separating portion) 79. The axial groove 79 forms a partition wall (not shown) for breaking the circumferential continuity of the coolant passage 95 in the top region of the support case 60. The groove 79 extends through the core 7 in the radial direction. The core 7 has cylindrical portions 77, 78 for forming an inlet coolant passage portion 61 and an outlet coolant passage portion 62.

The support case 60 can be formed (cast) by setting two such cores (see the cores 7, 7A in FIG. 14) in a mold (not shown) such that the core for the coolant passage 95 is disposed radially inside the core for the case oil passage 35 with radial clearance therebetween and injecting a molten metal material (material of the support case 60; e.g., an aluminum alloy) into the mold. In this case, the cores may be, for example, collapsible salt cores, and are removed by dissolving salt by introducing water into the core portions in a cast product removed from the mold. As a result, it is possible to manufacture the support case 60 in which: a portion corresponding to the core for the case oil passage 35 forms a space (space such as the case oil passage 35); a portion corresponding to the core for the coolant passage 95 forms a space (space such as the coolant passage 95); the radial clearance between the core for the case oil passage 35 and the core for the coolant passage 95 (annular clearance extending in the axial direction along substantially the entire axial length of the support case 60) forms a boundary wall surface portion 652 (see FIG. 3); clearance between the outer peripheral surface of the mold and the radially outer surface of the core for the case oil passage 35 (annular clearance extending in the axial direction along substantially the entire axial length of the support case 60) forms a radially outer wall surface portion 653 (see FIG. 3); clearance between the outer peripheral surface of the stator core 112 and the radially inner surface of the core for the coolant passage 95 (annular clearance extending in the axial direction along substantially the entire axial length of the support case 60) forms a radially inner wall surface portion 651 (see FIG. 3); and both axial end sides of each core form both end wall portions 654 (see FIG. 3).

The support case 60 holds the stator core 112 radially inside such that the support case 60 is in contact with the stator core 112 in the radial direction. That is, the support case 60 holds the stator core 112 so as to cover the radially outer surface of the stator core 112 with no clearance therebetween. The support case 60 thus non-rotatably supports the stator 10b including the stator core 112.

The support case 60 and the stator core 112 may be integrated through joining rather than bolting. That is, the radially inner surface of the support case 60 may be joined to the radially outer surface of the stator core 112. The support case 60 and the stator core 112 may be joined using any method such as shrink fitting or press fitting. An example will be described later.

The support case 60 preferably holds the stator core 112 such that the radially inner surface of the support case 60 is in contact with (in surface contact with) the substantially entire radially outer surface of the stator core 112. In this case, the entire stator core 112 can be cooled efficiently by a coolant that flows through the coolant passage 95 in the support case 60. In the present embodiment, as an example, the support case 60 extends along the entire length in the X direction of the stator core 112, and the inner peripheral surface of the support case 60 is in contact with the substantially entire outer peripheral surface of the stator core 112, as shown in FIG. 3. The expression "substantially entire" regarding the outer peripheral surface of the stator core 112 is a concept that allows a portion such as a welding groove (not shown) of the stator core 112 (portion where the outer peripheral surface of the stator core 112 and the inner peripheral surface of the support case 60 may be separated from each other in the radial direction).

The support case 60 forms the case oil passage 35 and the coolant passage 95 inside. In this case, the stator core 112, the coolant passage 95, and the case oil passage 35 are disposed adjacent to each other in this order from the radially inner side. The term "adjacent" refers to the state in which no portion other than the material of the support case 60 is interposed.

The coolant passage 95 is connected to a coolant passage in the inlet coolant passage portion 61 and a coolant passage in the outlet coolant passage portion 62. Specifically, the coolant passage 95 has its upstream end connected to the coolant passage in the inlet coolant passage portion 61 and its downstream end connected to the coolant passage in the outlet coolant passage portion 62. As shown in FIG. 1, the inlet coolant passage portion 61 and the outlet coolant passage portion 62 may be formed so as to protrude radially outward (upward in the vertical direction) from the support case 60. The inlet coolant passage portion 61 and the outlet coolant passage portion 62 are offset with respect to the groove 79 of the core 7, which will be described later, in the circumferential direction. In the example shown in FIG. 1, the inlet coolant passage portion 61 and the outlet coolant passage portion 62 are provided in the middle portion in the axial direction of the support case 60. However, the inlet coolant passage portion 61 and the outlet coolant passage portion 62 may be provided on both sides in the axial direction of the support case 60.

The coolant passage 95 extends in the circumferential direction in the range in which the stator core 112 extends in the axial direction. The coolant passage 95 is divided in the circumferential direction by the axial partition wall (not shown) in the top region, and has its one circumferential end connected to the coolant passage in the inlet coolant passage portion 61 and the other circumferential end connected to the coolant passage in the outlet coolant passage portion 62.

In the present embodiment, as shown in FIG. 3A, the coolant passage 95 is formed around a large number of pillar portions 66 (pillar portions extending in the radial direction) and around a large number of protruding portions 67 (including protruding end faces 671 side) (see FIGS. 3, 3A, and 4).

More specifically, the coolant passage 95 is defined on its radially inner side by the radially inner wall surface portion 651 and is defined on its radially outer side by the boundary wall surface portion 652, and is closed at its both axial ends by the both end wall portions 654. The large number of pillar portions 66 extending (standing) in the radial direction from the radially inner wall surface portion 651 to the boundary wall surface portion 652 and the large number of protruding portions 67 protruding radially inward from the boundary wall surface portion 652 are arranged in an annular space formed as described above (annular space extending in the axial direction along substantially the entire axial length of the support case 60). The radially inner end faces (protruding end faces 671) of the protruding portions 67 are separated from the radially inner wall surface portion 651 (that is, the protruding end faces 671 contacts the coolant passage 95). The large number of pillar portions 66 and the large number of protruding portions 67 function to allow the coolant to flow over the entire radially outer surface of the stator core 112 without stagnation while providing resistance to the flow. The large number of pillar portions 66 and the large number of protruding portions 67 may be arranged so as to be dispersed substantially evenly in the annular space. The arrangement of the large number of pillar portions 66 and the large number of protruding portions 67 will be described in detail later.

As described above, in the present embodiment, the support case 60 has, as portions forming the coolant passage 95, the cylindrical radially inner wall surface portion 651 and the cylindrical boundary wall surface portion 652 concentrically about the rotation axis I. The radially inner wall surface portion 651 and the boundary wall surface portion 652 form the coolant passage 95. In the support case 60, the large number of pillar portions 66 stand in the radial direction between the radially inner wall surface portion 651 and the boundary wall surface portion 652, and the large number of protruding portions 67 protrude from the boundary wall surface portion 652. The support case 60 has the inlet coolant passage portion 61 and the outlet coolant passage portion 62 both in the form of a hollow tube. The inlet coolant passage portion 61 forms a cooling medium inlet hole to the coolant passage 95, and the outlet coolant passage portion 62 forms a cooling medium outlet hole from the coolant passage 95. As described above, the coolant passage 95 is closed at its both axial ends by the both end wall portions 654, and is closed at its both peripheral ends by the partition wall (not shown) described above. Therefore, the coolant passage 95 connects the cooling medium inlet hole and the cooling medium outlet hole without communicating with the outside.

The core 7 shown in FIG. 4 includes the axial groove 79 for forming the axial partition wall (not shown) in the top region of the support case 60 as described above. The groove 79 extends through the core 7 in the radial direction. The coolant passage 95 has the partition wall corresponding to the groove 79, and can therefore prevent the flow of the coolant flowing straight from the inlet coolant passage portion 61 to the outlet coolant passage portion 62. That is, in order for the coolant introduced from the inlet coolant passage portion 61 to reach the outlet coolant passage portion 62, this coolant needs to pass around the large number of pillar portions 66 and the large number of protruding portions 67 while flowing around the radially outer side of the stator core 112. Therefore, the stator core 112 can be more effectively cooled compared to the case where the coolant flows straight from the inlet coolant passage portion 61 to the outlet coolant passage portion 62.

The case oil passage 35 extends in the circumferential direction in the range in which the stator core 112 extends in the axial direction. In the present embodiment, as an example, the case oil passage 35 is formed around a large number of pillar portions 68 (pillar portions extending in the radial direction) and around a large number of protruding portions 69 as shown in FIG. 3B (see FIG. 3). More specifically, the case oil passage 35 is defined on its radially inner side by the boundary wall surface portion 652 and is defined on its radially outer side by the radially outer wall surface portion 653, and is closed at its both axial ends by the both end wall portions 654. The large number of pillar portions 68 extending in the radial direction from the boundary wall surface portion 652 to the radially outer wall surface portion 653 and the large number of protruding portions 69 protruding radially inward from the radially outer wall surface portion 653 are arranged in an annular space formed as described above (annular space extending in the axial direction along substantially the entire axial length of the support case 60). The radially inner end faces (protruding end faces) of the protruding portions 69 are separated from the boundary wall surface portion 652. The large number of pillar portions 68 and the large number of protruding portions 69 function to allow the coolant to flow over the entire radially outer surface of the stator core 112 without stagnation while providing resistance to the flow. The large number of pillar portions 68 and the large number of protruding portions 69 may be arranged so as to be dispersed substantially evenly in the annular space. The pillar portions 68 and the protruding portions 69 in the case oil passage 35 may have substantially the same structure as the pillar portions 66 and the protruding portions 67 in the coolant passage 95. Hereinafter, the pillar portions 66 and the protruding portions 67 in the coolant passage 95 will be mainly described.

In the present embodiment, as an example, the case oil passage 35 includes a first oil passage portion 351 located on one side in the axial direction and a second oil passage portion 352 located on the other side in the axial direction, as shown in FIG. 3. The first oil passage portion 351 and the second oil passage portion 352 are independent oil passage portions that do not communicate with each other except upstream of inlet oil passages 330, 331. The inlet oil passages 330, 331 may be formed so as to protrude radially outward (downward in the vertical direction) from the support case 60 as shown in FIG. 1.

The first oil passage portion 351 extends in the circumferential direction on one side (X1 side in the present example) of the range in which the stator core 112 extends in the axial direction. The first oil passage portion 351 has a cylindrical shape about the rotation axis I (cylindrical shape including the pillar portions 68 and the protruding portions 69 as described above). The first oil passage portion 351 communicates at its one end with the inlet oil passage 330, and is open at the other end to an oil drip portion (not shown) radially facing the coil end 220A from above.

The second oil passage portion 352 extends in the circumferential direction on the other side (X2 side in the present example) of the range in which the stator core 112 extends in the axial direction. The second oil passage portion 352 has a cylindrical shape about the rotation axis I (cylindrical shape including the pillar portions 68 and the protruding portions 69 as described above). The second oil passage portion 352 communicates at its one end with the inlet oil passage 331, and is open at the other end to an oil drip portion (not shown) radially facing the coil end 220B from above.

In the present embodiment, as an example, the first oil passage portion 351 and the second oil passage portion 352 are symmetrical and separated from each other near the middle of the range in which the stator core 112 extends in the axial direction. It is therefore easy to cool the stator core 112 more uniformly using oil that passes through the first oil passage portion 351 and the second oil passage portion 352 while dividing the case oil passage 35 in the axial direction. In a modification, the first oil passage portion 351 and the second oil passage portion 352 may be asymmetric with respect to the middle of the range in which the stator core 112 extends in the axial direction, or the first oil passage portion 351 and the second oil passage portion 352 may communicate (be continuous) with each other like the coolant passage 95. The coolant passage 95 may also be divided in the axial direction like the case oil passage 35.

The flow of the coolant and oil in the coolant passage 95 and the case oil passage 35 described above will be described briefly.

The coolant supplied from the inlet coolant passage portion 61 (see arrow R1 in FIGS. 1 and 2) enters the coolant passage 95, flows around the radially outer side of the stator core 112 about the rotation axis I through the coolant passage 95, and exits from the outlet coolant passage portion 62 (see arrow R3 in FIG. 2). When the coolant flows into the coolant passage 95 from the inlet coolant passage portion 61, the coolant spreads along the entire axial length in an axially continuous channel portion 951, which will be described later, and flows around along the entire axial length of the coolant passage 95.

The oil supplied to the inlet oil passages 330, 331 (see arrows R10 in FIGS. 1 and 2) is supplied to the first oil passage portion 351 and the second oil passage portion 352 of the case oil passage 35. The oil supplied to the first oil passage portion 351 flows toward the X1 side in the X direction while flowing around the rotation axis I, reaches the top region of its end on the X1 side in the X direction, and is dripped from the oil drip portion (not shown) to the coil end 220A on the X1 side in the X direction (not shown). Similarly, the oil supplied to the second oil passage portion 352 flows toward the X2 side in the X direction while flowing around the rotation axis I, reaches the top region of its end on the X2 side in the X direction, and is dripped from the oil drip portion (not shown) to the coil end 220B on the X2 side in the X direction (not shown).

In the present embodiment, the coolant passage 95 is in contact with outer peripheral surfaces 660 of the large number of pillar portions 66 and in contact with outer peripheral surfaces 670 and the protruding end faces 671 of the large number of protruding portions 67. Therefore, the surface area that allows heat exchange of the coolant flowing in the coolant passage 95 can be efficiently increased. Heat exchange between the coolant in the coolant passage 95 and the oil etc. in the case oil passage 35 can thus be efficiently implemented. That is, the surface area of the wall surfaces that are in contact with the coolant passage 95 can be efficiently increased, and the heat exchange capacity of the coolant in the coolant passage 95 (heat exchange capacity for heat exchange with the oil in the case oil passage 35 and the stator core 112) can be efficiently increased. Such an advantage is facilitated by the large number of pillar portions 68 and the large number of protruding portions 69 in the case oil passage 35 based on the same principle.

In the example shown in FIGS. 1 to 4, the support case 60 forming the coolant passage 95 is in contact with the stator core 112. Therefore, only the radially inner wall surface portion 651 of the support case 60 is present between the coolant and the stator core 112. The coolant is cooled through heat exchange with outside air (e.g., air that passes through when the vehicle is traveling) in an radiator (not shown), and the oil is cooled through heat exchange with the coolant in the coolant passage 95. Therefore, the coolant has a lower temperature than the oil. Accordingly, the stator core 112 can be more efficiently cooled by the coolant compared to the case where, for example, another medium or member such as oil is interposed between the coolant and the stator core 112.

In the example shown in FIGS. 1 to 4, as described above, the coolant passage 95 extends along the entire length of the stator core 112 and along the entire circumference of the stator core 112 on the radially outer side of the stator core 112. Therefore, heat can be removed from the entire stator core 112.

In the example shown in FIGS. 1 to 4, the coolant passage 95 and the case oil passage 35 are formed in the support case 60. Therefore, a boundary portion between the coolant passage 95 and the case oil passage 35 can be formed in the support case 60. That is, since the support case 60 forming the coolant passage 95 forms the case oil passage 35, only the boundary wall surface portion 652 of the support case 60 is present between the coolant and the oil in the radial direction. Therefore, the oil can be more efficiently cooled by the coolant compared to the case where another member is interposed between the coolant and the oil. In the example shown in FIGS. 1 to 4, an oil cooler is therefore not required even in the rotating electrical machine 10 with a relatively high output.

In the example shown in FIGS. 1 to 4, as described above, the support case 60 is a single-piece member but forms the coolant passage 95 and the case oil passage 35 inside. It is therefore possible to reduce the number of components compared to a configuration in which a support case like the support case 60 is formed by coupling two or more members. Moreover, since a structure for such coupling (e.g., a bolting structure) etc. are not required, it is possible to achieve a simple configuration.

In the example shown in FIGS. 1 to 4, the oil in the case oil passage 35 may be constantly circulated while the rotating electrical machine 10 is in operation, or may be circulated only for a part of the period during which the rotating electrical machine 10 is in operation. For example, the oil in the case oil passage 35 is mainly used to cool the coil ends 220A, 220B as described above. Therefore, the oil in the case oil passage 35 may be circulated only for a period during which the coil ends 220A, 220B generate a relatively large amount of heat.

While the rotating electrical machine 10 having a specific structure is shown in FIGS. 1 to 4, the rotating electrical machine 10 may have any structure as long as the rotating electrical machine 10 includes the support case 60 formed by using a core like the core 7 shown in FIG. 4. The support case 60 need not necessarily have both of the coolant passage 95 and the case oil passage 35. As a preferred embodiment, each of the channel structures of the coolant passage 95 and the case oil passage 35 includes a large number of pillar portions (pillar portions 66 or pillar portions 68) etc. so that the surface area for thermal efficiency can be efficiently increased. However, either the coolant passage 95 or the case oil passage 35 may a channel structure in other forms. For example, the case oil passage 35 may have, as a channel structure in another form, a structure in which merely the radially outer wall surface portion 653 or the boundary wall surface portion 652 has protrusions and recesses on its surface. In this case, regarding the protrusions and recesses, the ends on one side in the radial direction of the protrusions are separated from the wall surface portion (that is, in the same form as the protruding portions 69), unlike the pillar portions whose both radial ends are connected to the wall surface portions (boundary wall surface portion 652 and radially outer wall surface portion 653). For example, the case oil passage 35 may have, as a channel structure in still another form, a structure in which the radially outer wall surface portion 653 and the boundary wall surface portion 652 do not substantially have protrusions and recesses on its surface.

Although a specific cooling method is disclosed in FIGS. 1 to 4, the rotating electrical machine 10 may be cooled by any method. Therefore, for example, the coolant passage 95 and the case oil passage 35 may be formed so that the coolant and the oil are circulated helically about the central axis I. Additionally, the oil may be used to cool the shaft of the rotor (not shown).

In FIGS. 1 to 4, the support case 60 integrally includes the inlet coolant passage portion 61 and the outlet coolant passage portion 62. However, either or both of the inlet coolant passage portion 61 and the outlet coolant passage portion 62 may be formed by a separate piece(s). When the inlet coolant passage portion 61 and the outlet coolant passage portion 62 are separate pieces, the support case 60 may have, at the positions where the inlet coolant passage portion 61 and the outlet coolant passage portion 62 are to be connected, radial holes serving as a cooling medium inlet hole and a cooling medium outlet hole. The same applies to the tubular portions forming the inlet oil passage 330 and the inlet oil passage 331.

Next, the configuration of the coolant passage 95 formed by the core 7 as described above will be described together with the configuration of the core 7. The coolant passage 95 will also be described using the configuration of the core 7 for forming the coolant passage 95. This is because the configuration of the coolant passage 95 that can be formed by the core 7 is uniquely determined when the configuration of the core 7 is determined. In other words, the diagram of the core 7 represents the outer surface (outer shell) of the coolant passage 95, and the solid portion of the core 7 is the space of the coolant passage 95. Therefore, the configuration of the core 7 and the configuration of the coolant passage 95 may be described below without being particularly distinguished from each other. Regarding the description of the configuration of the core 7, a certain element of the core 7 forms a certain element of the support case 60 (or the coolant passage 95). This relationship between the core 7 and the support case 60 is based on the assumption that the support case 60 is manufactured using the core 7.

As shown in FIG. 4, axial channel portions 951, 952 of the coolant passage 95 (core 7) that are connected to the coolant passage in the inlet coolant passage portion 61 and the coolant passage in the outlet coolant passage portion 62 serves as buffer areas for appropriately adjusting the axial spread of the coolant. Hereinafter, the configurations of channel portions (circumferential channel portions) of the coolant passage 95 (core 7) other than the channel portions 951, 952 will be described unless otherwise specified. The portions of the core 7 that form the channel portions 951, 952 may be molded separately from the portions of the core 7 that form the channel portions (circumferential channel portions) other than the channel portions 951, 952.

First, the configuration of the coolant passage 95 (core 7) will be described in more detail with reference to FIGS. 4 and 5 and the subsequent figures. Although the configuration of the coolant passage 95 (core 7) will be described below, the same description applies to the configuration of the case oil passage 35 (and the core 7A for forming the case oil passage 35).

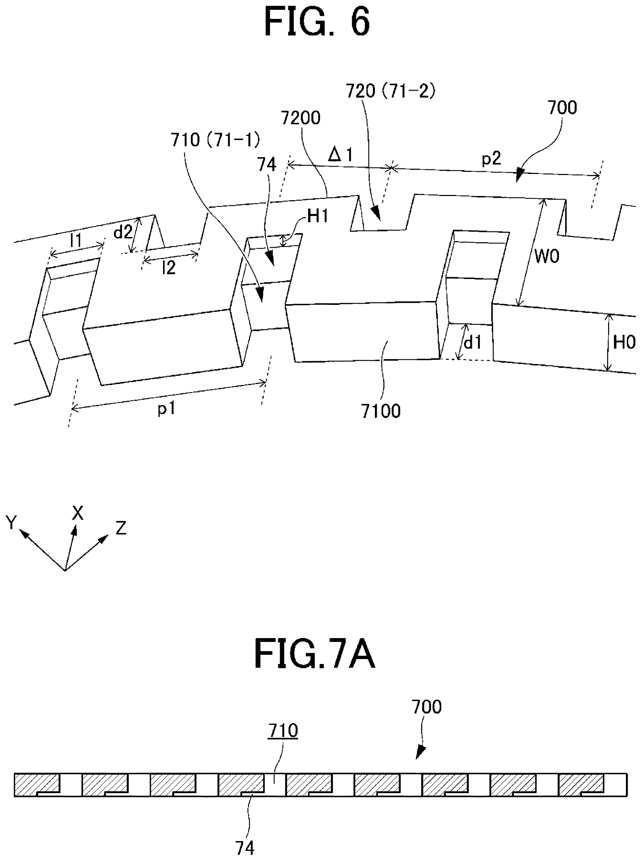

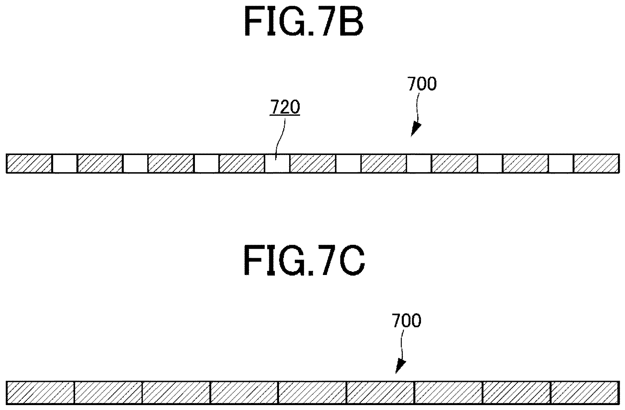

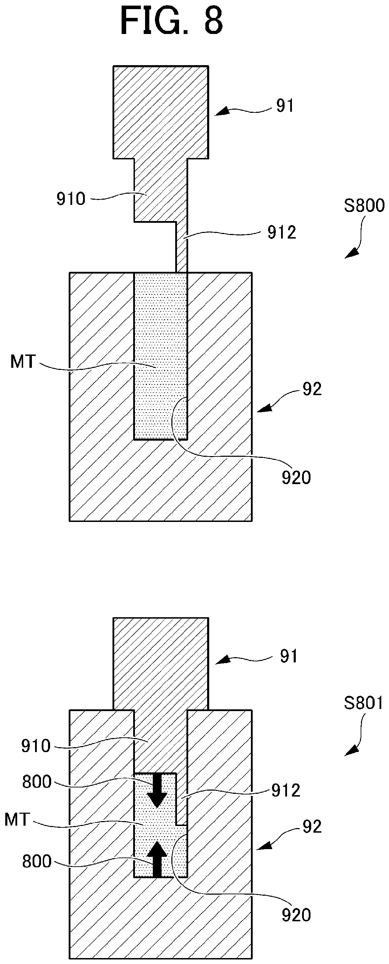

FIG. 5 is a perspective view showing one divided part (hereinafter simply referred to as "annular core 700") forming the core 7. FIG. 6 is an enlarged view of a part of one annular core 700. FIG. 7A is a sectional view taken along line A-A in FIG. 4, FIG. 7B is a sectional view taken along line B-B in FIG. 4, and FIG. 7C is a sectional view taken along line C-C in FIG. 4. FIG. 8 is a schematic diagram illustrating an example of a method for molding the radial recesses 74 and axial first recesses 710.

In the present embodiment, the core 7 is a collapsible core. The collapsible core refers to a type of core that can be removed by "collapsing" after the casting step. Examples of the collapsible core include a salt core and a shell core (sand). Salt cores are more resistant to heat and have less casting constraints than shell cores. Therefore, in the present embodiment, the collapsible core 7 is preferably a salt core.

In the present embodiment, the core 7 is formed by stacking such annular cores 700 as shown in FIG. 5 in the axial direction. FIG. 4 shows dividing lines L1 for each annular core 700. In FIG. 4, the core 7 consists of nine annular cores 700 stacked in the axial direction. However, the number of annular cores 700 forming one core 7 may be set as appropriate according to the axial length of the support case 60. The plurality of annular cores 700 forming one core 7 include an annular core 700 having the cylindrical portions 77, 78 (shown by "annular core 700-1" in FIG. 4). In the following description, however, the annular core 700 that does not have the cylindrical portions 77, 78 (or the portion in the circumferential range other than the cylindrical portions 77, 78 of the annular core 700-1) will be described unless otherwise specified.

The annular core 700 is formed by compressing and compacting a material (salt for the core) in the axial direction. The annular cores 700 except the annular core 700-1 described above have the same shape. The following description of the configuration of the annular core 700 is about one annular core 700 unless otherwise specified.

The annular core 700 has axial first recesses 710 in its end face (axial end face) on one side in the axial direction, and has axial second recesses 720 in its end face (axial end face) on the other side in the axial direction. Since the annular core 700 is formed by being compressed in the axial direction, the axial first recesses 710 and the axial second recesses 720 can be easily formed. For example, the axial first recesses 710 and the axial second recesses 720 can be formed by axial protrusions of a compression mold (see a protrusion 910 in FIG. 8).

The axial first recesses 710 form the through holes 71-1 for forming the first pillar portions 66-1 of the support case 60 described above, and the axial second recesses 720 form the through holes 71-2 for forming the second pillar portions 66-2 of the support case 60 described above.

Specifically, the annular core 700 includes, on its end face on the one side in the axial direction (negative side in the X direction in FIG. 5), a base surface 7100 extending in the circumferential direction at the same axial position. The base surface 7100 is a surface perpendicular to the axial direction (rotation axis I). The first recesses 710 recessed in the axial direction are formed periodically in the circumferential direction in the base surface 7100. The first recesses 710 are periodically set at equal intervals (constant pitch p1) except for a circumferential range R50 (see FIG. 5) corresponding to the channel portions 951, 952 described above. The first recesses 710 (and therefore the radial recesses 74) can thus be arranged evenly in the circumferential direction. Moreover, in the core 7 consisting of a stack of the plurality of annular cores 700 (see FIG. 4), the first recesses 710 (and therefore the radial recesses 74) can be arranged evenly in the axial direction.

Although the first recess 710 may have any circumferential length 11, the circumferential length 11 may be set to a value smaller than the pitch p1.

Similarly, the annular core 700 includes, on its end face on the other side in the axial direction (positive side in the X direction in FIG. 5), a base surface 7200 extending in the circumferential direction at the same axial position. The base surface 7200 is a surface perpendicular to the axial direction. The second recesses 720 recessed in the axial direction are formed periodically in the circumferential direction in the base surface 7200. The second recesses 720 are periodically set at equal intervals (constant pitch p2) except for the circumferential range R50 (see FIG. 5) corresponding to the channel portions 951, 952 described above.

The pitch p2 of the second recesses 720 may be different from the pitch p1 of the first recesses 710, but is preferably the same as the pitch p1 of the first recesses 710. Although the second recess 720 may have any circumferential length l2, the circumferential length l2 may be set to a value smaller than the pitch p2. The circumferential length l2 of the second recess 720 may be different from the length 11 of the first recess 710, but is preferably the same as the length 11 of the first recess 710.

In the present embodiment, the pitch p2 of the second recesses 720 is the same as the pitch p1 of the first recesses 710, but is out of phase with respect to the pitch p1 of the first recesses 710. That is, the circumferential positions of the second recesses 720 is shifted from the circumferential positions of the first recesses 710 by a predetermined shift amount Δ1. In this case, the predetermined shift amount Δ1 is preferably set so that the range in which the first recess 710 extends in the circumferential direction and the range in which the second recess 720 extends in the circumferential direction do not overlap each other (that is, do not overlap each other as viewed in the axial direction). In other words, the predetermined shift amount Δ1, the pitches p1, p2, and the circumferential lengths 11,12 are set so that the circumferential range of the first recess 710 and the circumferential range of the second recess 720 do not overlap each other.

In the present embodiment, the predetermined shift amount Δ1 is half the pitch p2 of the second recesses 720. That is, the predetermined shift amount Δ1 is set so that each first recess 710 is located at an intermediate position between two second recesses 720 adjacent to each other in the circumferential direction. The first recesses 710 and the second recesses 720 (and therefore the first pillar portions 66-1 and the second pillar portions 66-2) can thus be arranged evenly in the circumferential direction.

The depth d2 of the second recess 720 (amount by which the second recess 720 is recessed in the axial direction) may be the same as the depth d1 of the first recess 710 (amount by which the first recess 710 is recessed in the axial direction). In this case, the depth d2 of the second recess 720 (amount by which the second recess 720 is recessed in the axial direction) is preferably significantly smaller than half the axial base length (length from the base surface 7100 to the base surface 7200) W0 of one annular core 700, and is, for example, about 1/3 of the axial base length W0. In the configuration in which the sum of the depth d1 of the first recess 710 and the depth d2 of the second recess 720 is smaller than the axial base length W0 of one annular core 700 as described above, a certain axial area where no recess is formed extends in the shape of a belt in the circumferential direction. Hereinafter, such a belt-shaped area will be sometimes referred to as "belt-shaped area where no axial recess is formed."

The larger the base length W0 is, the more the number of annular cores 700 for forming one core 7 can be reduced. However, the numbers of axial first recesses 710 and axial second recesses 720 that can be formed in one core 7 (and therefore the number of pillar portions 68 in the support case 60) are reduced. Accordingly, the base length W0 may be adapted by considering this trade-off.

When the dimension of the depth d1 of the first recess 710 and the dimension of the depth d2 of the second recess 720 are fixed, the axial base length W0 of one annular core 700 becomes smaller as the axial dimension of the belt-shaped area where no axial recess is formed is reduced. Therefore, the number of annular cores 700 for forming one core 7 increases as the axial dimension of the belt-shaped area where no axial recess is formed is reduced. For example, when the axial dimension of the belt-shaped area where no axial recess is formed is set to "0," the number of annular cores 700 for forming one core 7 is relatively large.

In this regard, according to the present embodiment, it is possible to prevent the number of annular cores 700 for forming one core 7 from becoming excessive (and prevent an excessive increase in cost associated with this) by setting the axial dimension of the belt-shaped area where no axial recess is formed to a value larger than 0 (e.g., about 1/3 of W0 as described above). Setting the axial dimension of the belt-shaped area where no axial recess is formed to a value larger than 0 (e.g., about 1/3 of W0 as described above) also makes it easier to ensure that the annular cores 700 have required rigidity (e.g., rigidity required from the standpoint of shape stability during assembly).

In the present embodiment, the annular core 700 has the radial recesses 74 for forming the protruding portions 67 of the support case 60 described above. The radial recesses 74 are formed adjacent to the axial first recesses 710 in the axial direction in the belt-shaped area where no axial recess is formed, as described above. In this case, the plurality of first recesses 710 and the plurality of protruding portions 67 are located at different axial and circumferential positions from the plurality of second recesses 720. In the present embodiment, the plurality of protruding portions 67 extends in the axial direction along the entire axial length of the belt-shaped area where no axial recess is formed. However, the plurality of protruding portions 67 may extend in the axial direction along a part of the belt-shaped are where no axial recess is formed, or may extend beyond the belt-shaped area where no axial recess is formed.

The radial recesses 74 are formed so as to be paired with the first recesses 710. In this case, the radial recesses 74 can be formed simultaneously with the first recesses 710 using the same mold. For example, the radial recesses 74 can be formed together with the first recesses 710 by using such an annular upper mold 91 and an annular lower mold 92 as shown in FIG. 8. FIG. 8 schematically shows sectional views (sectional views taken along a plane including the rotation axis I) of the annular upper mold 91 and the annular lower mold 92. S800 shows the state before molding, and S801 shows the state during molding (mold clamping). In this case, the upper mold 91 has protrusions 910 for forming the first recesses 710 and protrusions 912 extending from the end faces of the protrusions 910, and the lower mold 92 has recessed grooves 920. In this case, the radial recesses 74 and the first recesses 710 can be simultaneously formed by the same mold by placing a material MT (salt for the core) in the recessed grooves 920 and lowering the upper mold 91 to compress the material MT in the axial direction (see arrows 800). The upper mold 91 may include protrusions for forming the second recesses 720 (different protrusions like the protrusions 910) at different circumferential positions. The range in which one radial recess 74 is formed in the circumferential direction may be set within the range in which corresponding one first recess 710 is formed in the circumferential direction in order to allow these recesses to be formed using such a mold.

According to such an annular core 700 of the present embodiment, the core 7 that can form a large amount of pillar portions 66 can be formed by concentrically stacking the plurality of annular cores 700 in the axial direction. When concentrically stacking the plurality of annular cores 700 in the axial direction, each of the first recesses 710 of one annular core 700 axially faces the base surface 7200 of another annular core 700 abutting on the one annular core 700 in the axial direction. The through holes 71-1 (first pillar portions 66-1) each having the first recess 710 and the base surface 7200 as peripheral walls are thus formed. Similarly, each of the second recesses 720 of one annular core 700 axially faces the base surface 7100 of another annular core 700 abutting on the one annular core 700 in the axial direction. The through holes 71-2 (second pillar portions 66-2) each having the second recess 720 and the base surface 7100 as peripheral walls are thus formed.

When a collapsible core like the core 7 is used, it is difficult to set radial through holes for forming the pillar portions 66 in one piece of the collapsible core. This is because the radial through holes are easily crushed by the axial compressive force during molding.

In this regard, according to the present embodiment, as described above, the axial first recesses 710 and the axial second recesses 720 are formed in the annular core 700 instead of the radial through holes for forming the pillar portions 66. The axial first recesses 710 and the axial second recesses 720 can be relatively easily molded as briefly described with reference to FIG. 8. The individual annular cores 700 can be individually manufactured in such a manner that meets manufacturing requirements. Therefore, according to the present embodiment, the core 7 that can form a large number of pillar portions 66 can be formed in such a manner that meets the manufacturing requirements.

According to the present embodiment, as described above, the axial first recesses 710 and the axial second recesses 720 are formed at different positions in the axial direction and the circumferential direction. In this case, as shown in FIGS. 7A to 7C, the axial first recesses 710 (FIG. 7A) and the axial second recesses 720 (FIG. 7B) occur alternately and periodically in the circumferential direction with solid portions (FIG. 7C) therebetween. The axial first recesses 710 and the axial second recesses 720 occur alternately and periodically in the axial direction via the radial recesses 74 or the solid portions therebetween. According to the present embodiment, the first pillar portions 66-1 and the second pillar portions 66-2 can thus be formed with a relatively high density by the staggered arrangement, which can improve the cooling performance of the coolant passage 95. When the axial first recesses 710 and the axial second recesses 720 are formed at the same circumferential positions or formed so as to overlap each other in the circumferential direction, the axial base length W0 of one annular core 700 tends to be large from the standpoint of the rigidity of the annular cores 700 as described above. This is disadvantageous for increasing the arrangement density of the pillar portions 66. As described above, according to the present embodiment, it is possible to increase the arrangement density of the pillar portions 66 while meeting the manufacturing requirements.

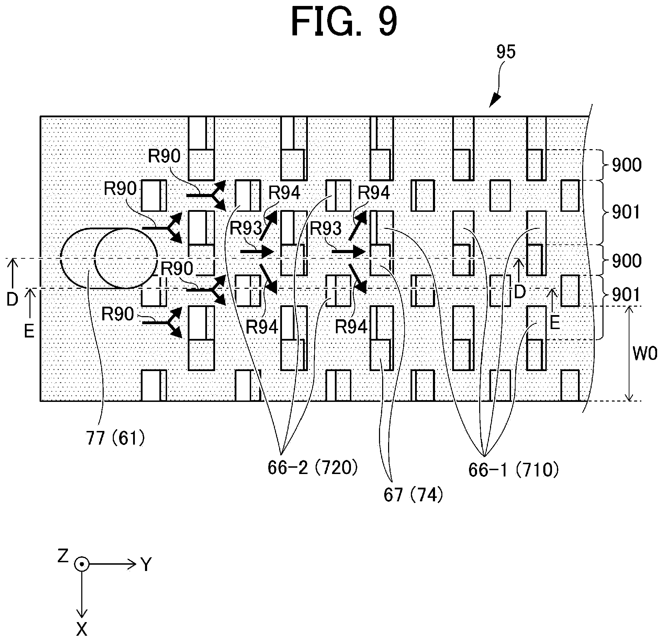

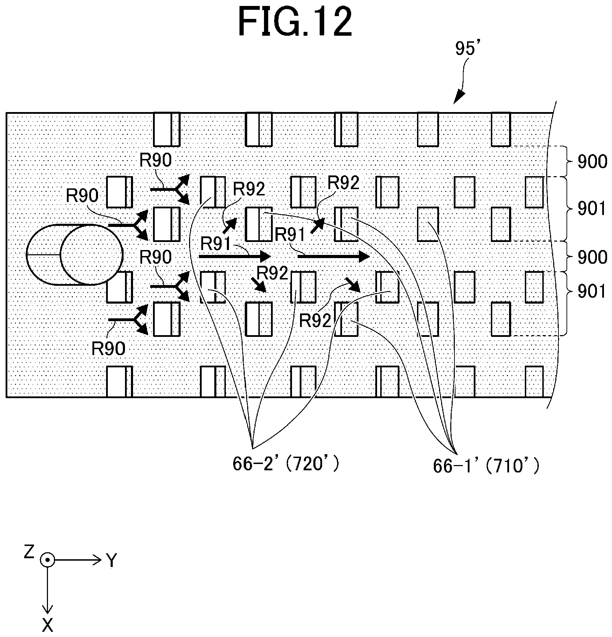

Next, the flow of the coolant in the coolant passage 95 of the present embodiment and the technical significance of the radial recesses 74 will be described with reference to FIGS. 9 to 11 in comparison with a comparative example shown in FIG. 12.

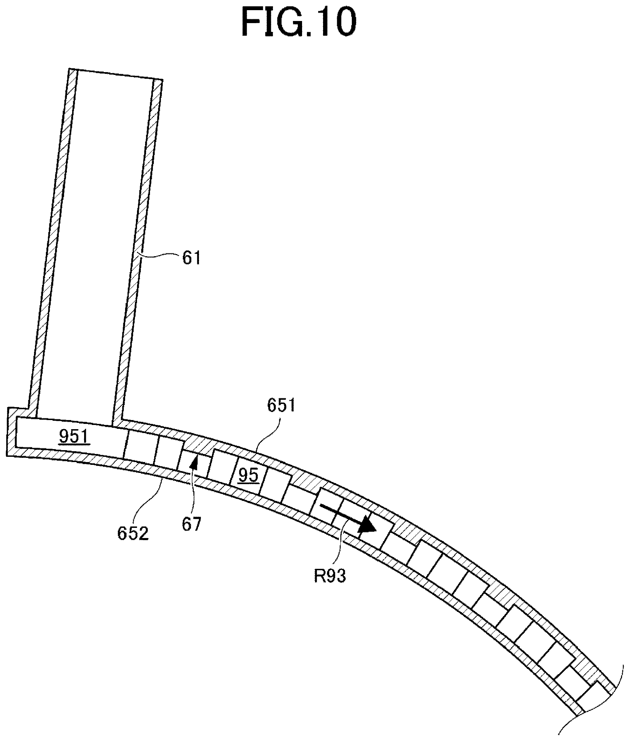

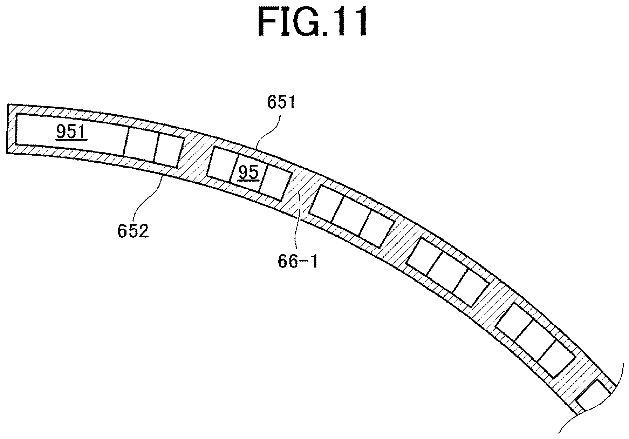

FIG. 9 is an illustration of the flow of the coolant in the coolant passage 95 of the present embodiment, and is a top view showing a part of the outer shell of the coolant passage 95. In FIG. 9, part of the flow of the coolant is schematically shown by arrows R90, arrows R93, and arrows R94. FIG. 10 is a sectional view taken along line D-D in FIG. 9, and FIG. 11 is a sectional view taken along line E-E in FIG. 9. FIG. 12 is an illustration of the flow of the coolant in a coolant passage 95' according to the comparative example, and is a top view showing a part of an outer shell of the coolant passage 95'. In FIG. 12, part of the flow of the coolant is schematically shown by arrows R90, arrows R91, and arrows R92. Although arrows R90 etc. are shown only in some regions in FIGS. 9 and 12, substantially the same flow of the coolant is implemented in other similar regions.

As shown in FIGS. 9 and 12, the coolant passage 95' according to the comparative example is different from the coolant passage 95 according to the present embodiment in that the coolant passage 95' does not have the protruding portions 67. Such a coolant passage 95' can be formed using a core consisting of annular cores (not shown), namely the above annular cores 700 with the radial recesses 74 omitted, similarly stacked in the axial direction.

In both the present embodiment and the comparative example, the coolant supplied from the inlet coolant passage portion 61 flows generally in the circumferential direction, as described above.

Since the pillar portions 66 extend perpendicularly to such a flow of the coolant, the pillar portions 66 have a function to distribute the flow in the axial direction by impeding the flow. That is, the flow that hits each pillar portion 66 in the circumferential direction (see arrows R90) is divided in the axial direction at each pillar portion 66 and flows downstream.

In the present embodiment (the same applies to the comparative example), as shown in FIG. 9, the pillar portions 66 are arranged at equal intervals in the circumferential direction, but are arranged unevenly in the axial direction. That is, the circumferential position of each first pillar portion 66-1 matches an intermediate position between two second pillar portions 66-2 adjacent to each other in the circumferential direction, but the axial position of each first pillar portion 66-1 does not match an intermediate position between two second pillar portions 66-2 adjacent to each other in the axial direction. Such unevenness occurs due to the "belt-shaped areas where no axial recess is formed" described above (see sign 900 in FIGS. 9 and 12). In other words, each belt-shaped area where no axial recess is formed form a channel portion where no pillar portion 66 is formed, which causes the axial unevenness in the arrangement of the pillar portions 66. In particular, in the present embodiment, each belt-shaped area where no axial recess is formed has a relatively large axial dimension (e.g., about 1/3 of the axial base length W0 of one annular core 700 as described above). This causes significant axial unevenness.

Such axial unevenness in the arrangement of the pillar portions 66 tends to prevent the resistance to the flow in the circumferential direction from becoming uniform. Specifically, the coolant passage 95 has such unevenness that the resistance to the flow in the circumferential direction becomes smaller in the channel portions where no pillar portion 66 is formed than in the other portions.

Therefore, in the comparative example, the coolant tries to flow more in the channel portions where no pillar portion 66 is formed (channel portions in the belt-shaped areas where no axial recess is formed), as shown by arrows R91 in FIG. 12. As a result, in each circumferential area where the pillar portions 66 are arranged with a high density in the axial direction (see signs 901 in FIGS. 9 and 12), the flow rate of the coolant around the pillar portions 66 tends to be relatively low. That is, only a small amount out of the flow of the coolant in each channel portion where no pillar portion 66 is formed (see arrows R91 in FIG. 12) is distributed in the axial direction (see arrows R92 in FIG. 12).

As described above, when the channel portions where no pillar portion 66 is formed (channel portions in the belt-shaped areas where no axial recess is formed) are present in the coolant passage 95, a large amount of coolant flows into the channel portions, so that the flow of the coolant tends to become uneven.

On the other hand, according to the present embodiment, the plurality of protruding portions 67 are formed in the belt-shaped area where no axial recess is formed. This can reduce the inconvenience that arises in the comparative example described above. Specifically, as shown in FIG. 10, the protruding portions 67 provide resistance to the flow in the circumferential direction by a decrease in sectional area (sudden contraction). This can reduce the flow rate in the channel portions where no pillar portion 66 is formed. As a result, as schematically shown by arrows R93, R94 in FIG. 9, part of the coolant flowing in the circumferential direction toward the protruding portion 67 is diverted to both axial sides of the protruding portion 67, so that such unevenness that occurs in the comparative example as described above can be reduced. That is, of the flow of the coolant in the channel portions where no pillar portion 66 is formed, the flow that is distributed in the axial direction (see arrows R94 in FIG. 9) is facilitated, so that the unevenness in the flow of the coolant can be reduced. Hereinafter, such a function of the protruding portions 67, that is, the function to reduce the flow rate in the channel portions where no pillar portion 66 is not formed, will also be referred to as "flow rate equalization function."

According to the present embodiment, in the channel structure having a plurality of pillar portions 66, unevenness in the flow of the coolant can thus be reduced while meeting the manufacturing requirements.

As the radial height (see depth H1) of such protruding portions 67 as described above is increased, the protruding portions 67 becomes more similar in form to the pillar portions 66 and can function more similarly to the pillar portions 66. However, when the protruding portions 67 have the same radial height as the pillar portions 66, this is equivalent to the pillar portions 66 being substantially enlarged. In this case, not only the manufacturing requirements as described above are met, but also the resistance to the flow of the coolant in the channel portions where no pillar portion 66 is formed becomes excessive.

Therefore, the radial height (dimension) of the protruding portions 67 is adapted so as to meet the manufacturing requirements as described above and to properly implement the flow rate equalization function as described above. In this regard, the depth H1 (see FIG. 6) of the radial recesses 74 corresponding to the radial height of the protruding portions 67 is significantly smaller than the radial thickness H0 of the core 7, where H0 (see FIG. 6) represents the radial thickness of the core 7 (= the radial height of the pillar portions 66). The radial thickness H0 of the core 7 is, for example, about 4 mm to 6 mm so that the radial size of the support case 60 does not become excessive. In this case, the radial height of the protruding portions 67 (depth H1 of the radial recesses 74) may be in the range of 0.5 mm to 1.5 mm. As a result, it is possible to implement the support case 60 having the flow rate equalization function and having excellent cooling performance while reducing its radial size. The radial height of the protruding portions 67 may not be constant due to the draft angle of the mold (see FIG. 8).

In the present embodiment, as described above, the protruding portions 67 are formed adjacent to the first pillar portions 66-1. However, the protruding portions 67 may be formed adjacent to the second pillar portions 66-2 in addition to or instead of being formed adjacent to the first pillar portions 66-1.

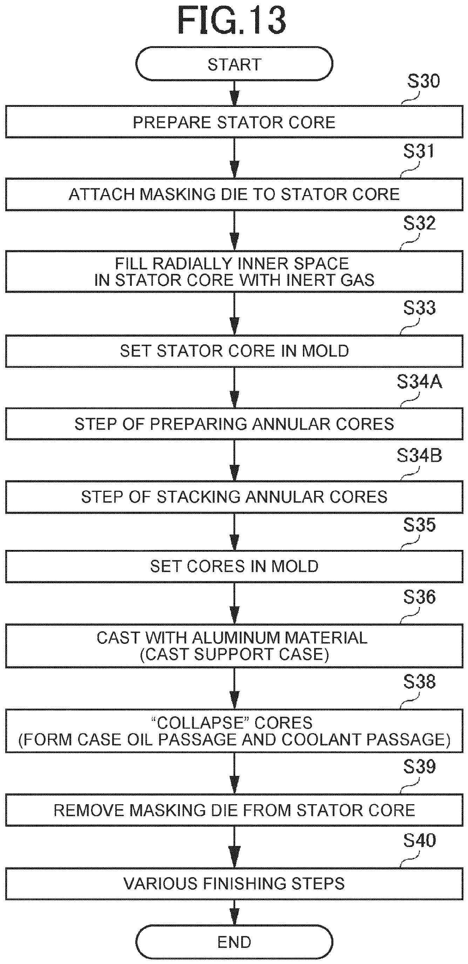

Next, a preferred example of a method for manufacturing the rotating electrical machine 10 using the core 7 described above will be described with reference to FIGS. 13 and 14.

FIG. 13 is a schematic flowchart showing the flow of a method for manufacturing the stator 10b. FIG. 14 is a diagram illustrating the manufacturing method shown in FIG. 13, and is a sectional view schematically showing the state during the casting step.

The method for manufacturing the stator 10b first includes preparing the stator core 112 (step S30). For example, the stator core 112 is made of annular magnetic steel laminations. In this case, the steel laminations may not be joined to each other, or may be joined by welding etc.

The method for manufacturing the stator 10b then includes setting a masking die 170 to the stator core 112 (step S31). The masking die 170 has a function to protect both axial end faces of the stator core 112 and the radially inner surface of the stator core 112 (surface on which a rotor core is housed), as will be described later. In the example shown in FIG. 14, the masking die 170 includes an upper masking member 171, a lower masking member 172, and fastening bolts 173.

Thereafter, the method for manufacturing the stator 10b includes filling a space 80 in the stator core 112 with an inert gas (step S32). The role of the inert gas will be described later.

Subsequently, the method for manufacturing the stator 10b includes setting the stator core 112 in a casting mold 1400 (schematically shown in FIG. 14) (step S33). At this time, the stator core 112 with the above masking die 170 attached thereto is set in the casting mold 1400.

Subsequently, the method for manufacturing the stator 10b includes a preparation step of preparing a plurality of the annular cores 700 described above (step S34A), and a stacking step of concentrically stacking the prepared plurality of annular cores 700 in the axial direction (step S34B). The core 7 is thus obtained. The core 7A can also be obtained by the same method as the core 7. The plurality of annular cores 700 may be stacked before being set in the mold. In this case, for example, the annular cores 700 may be bonded together so as to keep the annular cores 700 stacked. Alternatively, the plurality of annular cores 700 may be stacked when set in the casting mold 1400 (the stacking may be implemented substantially simultaneously with the subsequent step S35).

Subsequently, the method for manufacturing the stator 10b includes setting the cores 7, 7A obtained in step S34B in the casting mold 1400 (step S35). In this case, the core 7 and the core 7A are set radially outside the stator core 112 (see FIG. 14). Specifically, the core 7 is set radially outside the stator core 112 located on the radially inner side with clearance therebetween, the core 7A is set radially outside the core 7 with clearance therebetween and is set radially inside the casting mold 1400 located on the radially outer side with clearance therebetween.

Subsequently, the method for manufacturing the stator 10b includes a step (casting step) of casting the support case 60 with a material mainly composed of aluminum (hereinafter simply referred to as "aluminum material") by pouring the aluminum material in a molten state (i.e., in the form of molten metal) into the casting mold 1400 with the stator core 112 set therein (step S36). Although the die casting (aluminum gravity casting) method in which casting is performed using only the weight of the molten aluminum material is used in the present embodiment, other casting methods may be used. FIG. 14 is a schematic sectional view showing the aluminum material poured into the mold in the casting step. In FIG. 14, the cores 7, 7Ain a cylindrical shape are each schematically shown in section, and the poured aluminum material is schematically shown by shaded areas 90.

When the molten aluminum material is introduced into the casting mold 1400, the aluminum material flows so as to cover the outer peripheral surface of the stator core 112. The support case 60 can thus be firmly bonded to the outer peripheral surface of the stator core 112. In order to increase the bonding strength between the outer peripheral surface of the stator core 112 and the support case 60, the outer peripheral surface of the stator core 112 may be subjected to a process for facilitating bonding to the support case 60 (e.g., an aluminizing process) before the stator core 112 is set in the mold in step S33. For example, the aluminizing process may be implemented by immersing the stator core 112 with the space 80 filled with the inert gas in a bath such as an aluminum bath (e.g., a molten aluminum bath).

The poured aluminum material flows so as to fill, from the radially inner side, each radial clearance in the stator core 112, the core 7, the core 7A, and the casting mold 1400 on the radially outer side. Specifically, the aluminum material flows so as to cover the outer and inner peripheral surfaces of each of the plurality of annular cores 700 forming the core 7 (the same applies to the core 7A) and fill the through holes 71 and the radial recesses 74. As a result, the support case 60 can be formed that has the coolant passage 95 including the pillar portions 66 and the protruding portions 67 and the case oil passage 35 having the pillar portions 68 and the protruding portions 69 described above.

In the present embodiment, as discussed above, the stator core 112 with the masking die 170 attached thereto is set in the casting mold 1400. This can reduce the possibility that the aluminum material may adhere to end faces 1125, 1126 of the stator core 112 or that the aluminum material may enter the space 80.

In the present embodiment, the casting step of step S36 is performed with the space 80 filled with the inert gas. In the case where the casting step of step S36 is performed with the space 80 filled with the inert gas, damage to insulating films on the steel laminations forming the stator core 112 can be reduced compared to other cases (i.e., cases where the casting step of step S36 is performed with the space 80 not filled with the inert gas).

Specifically, when the casting step of step S36 is implemented with the space 80 not filled with the inert gas (i.e., in an atmosphere containing oxygen), the radially inner surface of the stator core 112 is exposed to a high temperature atmosphere due to the hot aluminum material. As a result, the insulating films on the steel laminations of the stator core 112 are broken, and the intended magnetic performance of the stator core 112 may not be achieved.

In this respect, when the casting step of step S36 is performed with the space 80 filled with the inert gas, generation of oxide scales is prevented or effectively reduced. This is because, even if the stator core 112 is exposed to a high temperature atmosphere, this atmosphere does not substantially contain oxygen. As a result, the insulating films on the steel laminations of the stator core 112 are protected, which effectively reduce the possibility that the intended magnetic performance of the stator core 112 may not be achieved. The same applies to the case where the aluminizing process described above is performed with the space 80 filled with the inert gas.

Subsequently, the method for manufacturing the stator 10b includes removing the cores 7, 7A for forming the case oil passage 35 and the coolant passage 95 described above by "collapsing" the cores 7, 7A (step S38) (example of the removing step). When the cores 7, 7A are salt cores, the cores 7, 7A can be "collapsed" and removed by introducing water etc. as described above. The case oil passage 35 and the coolant passage 95 described above are thus formed inside the support case 60.

Subsequently, the method for manufacturing the stator 10b includes removing the masking die 170 described above from the stator core 112 (step S39). Step S39 may be performed before step S38 described above.

Subsequently, the method for manufacturing the stator 10b includes various finishing steps such as winding the stator coil 114 around the stator core 112 (step S40).

According to the example shown in FIG. 13, the stator 10b in which the support case 60 and the stator core 112 are firmly bonded together can be thus easily manufactured. The rotating electrical machine 10 can be formed by mounting the rotor (not shown) radially inside the stator 10b thus manufactured.

In the example shown in FIG. 13, the order of the steps may be reversed as appropriate. For example, steps S34A to S35 may be performed before step S33. The example shown in FIG. 13 relates to the method in which the support case 60 is integrally formed around the stator core 112. However, the support case 60 alone may be manufactured separately from the stator core 112 by setting the cores 7, 7A in the mold.

Although the embodiments are described in detail above, the present disclosure is not limited to the specific embodiments, and various modifications and changes can be made within the scope of the claims. It is also possible to combine all or part of the constituent elements of the embodiments described above. Of the effects of each embodiment, those related to dependent claims are additional effects distinct from generic concepts (independent claims).

For example, in the above embodiments, the protruding portions 67 protrude radially inward from the boundary wall surface portion 652 in the support case 60. However, the protruding portions 67 may protrude radially outward from the radially inner wall surface portion 651. Alternatively, the protruding portions 67 may protrude radially inward from the boundary wall surface portion 652 and protrude radially outward from the radially inner wall surface portion 651. The same applies to the protruding portions 69 for the case oil passage 35.

In the above embodiments, the pillar portions 66 (and also the pillar portions 68, the same applies to the following description) are cylindrical. However, the pillar portions 66 may have any sectional shape, and need not necessarily have a constant sectional shape at each position in the height direction (radial direction). For example, the pillar portions 66 may have a constriction such that their sectional area decreases near the middle portion in the height direction.

### Description of the Reference Numerals

10 ... rotating electrical machine, I ... rotation axis, 60 ... support case (cooling member), 61 ... inlet coolant passage portion (first portion), 62 ... outlet coolant passage portion (second portion), 651 ... radially inner wall surface portion (third portion, second wall portion), 652 ... boundary wall surface portion (third portion, first wall portion), 66 (66-1) ... first pillar portion, 66 (66-2) ... second pillar portion, 660 ... outer peripheral surface, 67 ... protruding portion, 670 ... outer peripheral surface, 671 ... protruding end face, 95 ... coolant passage (cooling medium passage), 700 ... annular core (collapsible core), 71 ... through hole, 74 ... radial recess, 710 ... first recess (axial recess) , 720 ... second recess (axial recess)

## Claims

1. A cooling member for a rotating electrical machine, the cooling member comprising:
a first portion forming a cooling medium inlet hole;
a second portion forming a cooling medium outlet hole; and
a third portion forming a cooling medium passage that connects the cooling medium inlet hole and the cooling medium outlet hole without communicating with outside, wherein
the third portion includes, in the cooling medium passage, a plurality of first pillar portions each standing in a first direction perpendicular to a flow of a cooling medium, and a plurality of protruding portions each protruding in the first direction, and
the cooling medium is in contact with surfaces of the plurality of first pillar portions and surfaces of the protruding portions that are exposed to the cooling medium passage.

2. The cooling member according to claim 1, wherein:
the plurality of first pillar portions and the plurality of protruding portions are provided in pairs; and
a plurality of pairs of the plurality of first pillar portions and the plurality of protruding portions is arranged at equal intervals and without being adjacent to each other in a second direction and a third direction, the second direction and the third direction being two directions perpendicular to the first direction and perpendicular to each other.

3. The cooling member according to claim 2, wherein:
the third portion includes a radially outer cylindrical first wall portion and a radially inner cylindrical second wall portion concentrically about a rotation axis of the rotating electrical machine, and forms the cooling medium passage between the first wall portion and the second wall portion;
the second direction and the third direction correspond to a circumferential direction and an axial direction with respect to the rotation axis; and
in each of the plurality of pairs, the first pillar portion and the protruding portion are adjacent to each other in the axial direction.

4. The cooling member according to claim 3, wherein:
the third portion further includes a plurality of second pillar portion;
the cooling medium is in contact with surfaces of the plurality of second pillar portions that are exposed to the cooling medium passage; and
the plurality of second pillar portions is located at different positions in the axial direction and the circumferential direction with respect to the plurality of first pillar portions and the plurality of protruding portions.

5. The cooling member according to any one of claims 1 to 4, wherein a dimension in the first direction of the protruding portion is in a range of 0.5 mm to 1.5 mm.

6. A rotating electrical machine, comprising:
a stator core; and
a cooling member joined to a radially outer side of the stator core, wherein
the cooling member includes
a first portion forming a cooling medium inlet hole,
a second portion forming a cooling medium outlet hole, and
a third portion forming a cooling medium passage that connects the cooling medium inlet hole and the cooling medium outlet hole without communicating with outside,
the third portion includes, in the cooling medium passage, a plurality of first pillar portions each standing in a first direction perpendicular to a flow of a cooling medium, and a plurality of protruding portions, and
the cooling medium is in contact with surfaces of the plurality of first pillar portions and surfaces of the protruding portions that are exposed to the cooling medium passage.

7. A method for manufacturing an annular cooling member to be used for a rotating electrical machine, the method comprising:
a preparation step of preparing a plurality of annular collapsible cores each having an axial recess in an axial end face and each having a radial recess in an outer peripheral surface or an inner peripheral surface;
a stacking step of concentrically stacking the plurality of collapsible cores in an axial direction in such a manner that the axial recesses form a radial through hole;
a casting step of, with the plurality of collapsible cores stacked in a mold, pouring a material of the cooling member into the mold in such a manner that the material covers the outer peripheral surfaces and the inner peripheral surfaces of the plurality of collapsible cores and fills the through hole; and
a removing step of removing the plurality of collapsible cores after the casting step.
